# EUROPÄISCHE PATENTSCHRIFT

(11) **EP 2 027 644 B1**
(45) Veröffentlichungstag und Bekanntmachung des Hinweises auf die Patenterteilung: **25.11.2009**
(21) Anmeldenummer: 07722417.8
(22) Anmeldetag: 11.05.2007
(51) Int. Cl.: H02K 49/10, F01L 9/04

(54) **ANORDNUNG ZUR ERZEUGUNG EINER NICHTLINEAREN KRAFT- BZW. DREHMOMENTKENNLINIE**
ARRANGEMENT FOR GENERATING A NON-LINEAR FORCE OR TORQUE CURVE
ENSEMBLE DE PRODUCTION D'UNE COURBE CARACTERISTIQUE NON LINEAIRE D'UNE FORCE OU D'UN COUPLE

(30) Priorität: 18.05.2006 DE 102006023654
(43) Veröffentlichungstag der Anmeldung: 25.02.2009
(73) Patentinhaber: Institut für Automatisierung und Informatik Gmbh Zentrum für Industrielle Forschung und Entwicklung Wernigerode, 38855 Wernigerode (DE)
(72) Erfinder: BRAUNE, Steffen, 38855 Wernigerode (DE); KRAMER, Klaus-Dieter, 06536 Berga (DE)
(74) Vertreter: Fischer, Volker
(86) Internationale Anmeldenummer: PCT/DE2007/000868
(87) Internationale Veröffentlichungsnummer: WO 2007/134575

(56) Entgegenhaltungen:
- EP-A- 0 662 569
- EP-A- 1 263 122
- EP-A- 1 578 009
- EP-A- 1 589 643
- WO-A-96/07611
- WO-A-2004/013947
- DE-A1- 3 545 214
- DE-A1- 19 904 153
- FR-A1- 2 782 419
- JP-A- 59 159 462
- US-B1- 6 949 854

## Beschreibung

Die Erfindung betrifft eine Anordnung zur Erzeugung einer nichtlinearen Kraft- bzw. Drehmomentkennlinie, die insbesondere in Einrichtungen zur Betätigung von Gaswechselventilen an Verbrennungsmotoren eingesetzt werden kann.

Bekannte Anordnungen zur Betätigung von Gaswechselventilen nutzen die Unterstützung von Federn für den Öffnungs- bzw. Schließvorgang des Ventils (DE 103 58 936 A1; DE 10311 275 A1; DE 101 40 461 A1). Der Vorteil der Federunterstützung liegt im Falle einer elektromagnetischen Betätigung von Gaswechselventilen in der Reduzierung der durch den Ventilaktuator aufzubringenden Kräfte, die einhergeht mit einer Reduzierung der aufgenommenen elektrischen Leistung des Aktuators. Problematisch dabei ist, dass der Ventilaktuator in den Endlagen gegen die Kraft der Federn halten muss. Besonders im Hinblick darauf, dass bei Verwendung der "klassischen" Ventilfeder diese die notwendige Schließkraft für das Ventil aufbringen muss, sind üblicherweise große Haltekräfte notwendig.

DE 3 545 214 offenbart eine Magnetkupplung.

Besonders beim Betreiben eines rotatorisch wirkenden Aktuators, der seine Kraft über einen doppelseitigen Kipphebel auf zwei oder mehr Ventile überträgt, besteht die Notwendigkeit, eine Einrichtung zur Unterstützung des Öffnungsvorganges aller zu betätigenden Ventile einzusetzen.

Daraus ergibt sich die Aufgabe, eine Anordnung zu entwickeln, die in den Endlagen der Ventilbewegung Kraft zum Beschleunigen des Ventils bereitstellt und insbesondere oberhalb der Position "Ventil geschlossen" nur eine geringe oder gar keine Kraftwirkung verursacht.

Diese Aufgabe wird durch die Schaffung einer Anordnung zur Erzeugung einer nichtlinearen Kraft- bzw. Drehmomentkennlinie gemäß den Merkmalen des Hauptanspruches gelöst. In den zugehörigen Unteransprüchen werden besonders vorteilhafte Ausgestaltungen der Anordnung beansprucht.

Dabei gehört es zum Wesen der Erfindung, dass die erfindungsgemäße Anordnung die Funktion der sonst bei elektromagnetischen Ventilaktuatoren üblichen Öffnungsfedern übernimmt und dabei - ausgehend von einer mittleren Nulllage des Rotors des Ventilaktuators - bei der die zur Verfügung gestellte Kraft null oder annährend null ist - bei geringfügiger Verdrehung (z. B. beim Beginn der Ventilöffnung) eine hohe Kraft erzeugt, die bei weiterer Verdrehung weitestgehend linear abnimmt.

Ausgehend von der mittleren Nulllage ist diese Kraft stets so gerichtet, dass sie sowohl bei links- wie auch bei rechtsseitiger Verdrehung den Öffnungsvorgang de(s)(r) jeweiligen Ventil(s)(e) unterstützt.

In Verbindung mit der an jedem Ventil vorhandenen Schließfeder ergibt sich so die Funktionsweise eines Feder-Masse-Schwingers.

Die Erfindung wird nachstehend an einem Ausführungsbeispiel näher erläutert. Dabei zeigen die zugehörigen Zeichnungen in
- Fig. 1:: eine Prinzipskizze der Anordnung zur Erzeugung einer nichtlinearen Kraft- bzw. Drehmomentkennlinie,
- Fig. 2:: die Prinzipdarstellung einer Duplexanordnung zur Betätigung zweier Ventile einer Verbrennungsmaschine unter Verwendung der erfindungsgemäßen Anordnung zur Erzeugung einer nichtlinearen Kraft- bzw. Drehmoment- kennlinie,
- Fig. 3:: einen Kraftverlauf während eines Ventilhubes,
- Fig. 4:: einen Drehmomentverlauf an einer Duplexanordnung zur Betätigung zweier Ventile und
- Fig. 5:: eine Abwicklungsskizze einer besonderen Gestaltung von Polen und Per- manentmagnetsegmenten von Rotor und Stator der erfindungsgemäßen Anordnung zur Erzeugung einer nichtlinearen Kraft- bzw. Drehmoment- kennlinie

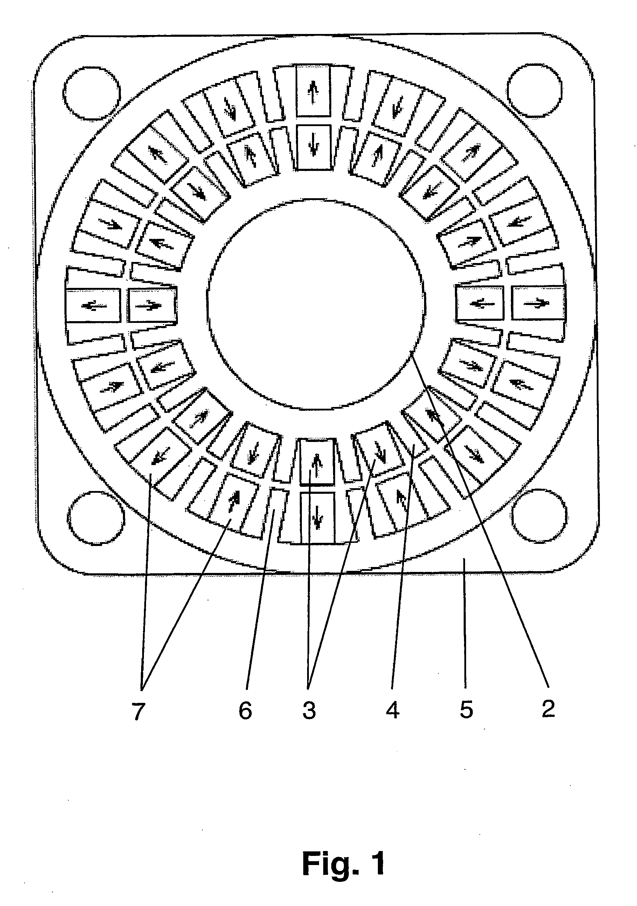

Gemäß Fig. 1 weist die erfindungsgemäße Anordnung zur Erzeugung einer nichtlinearen Kraft- bzw. Drehmomentkennlinie einen eisernen Rotor auf, der aus einer Rotorwelle 2 und alternierend magnetisierten Permanentmagneten 3 sowie Polen 4 besteht. Ein aus Magnetblechen zusammengesetzter Stator 5 weist Pole 6 auf, zwischen denen sich alternierend magnetisierten Permanentmagnete 6 befinden. Statorbohrungen dienen zur Befestigung der erfindungsgemäßen Anordnung zur Erzeugung einer nichtlinearen Kraft- bzw. Drehmomentkennlinie an einem Reluktanzmotor 1 einer rotatorischen Betätigungseinrichtung für Gaswechselventile einer Verbrennungsmaschine.

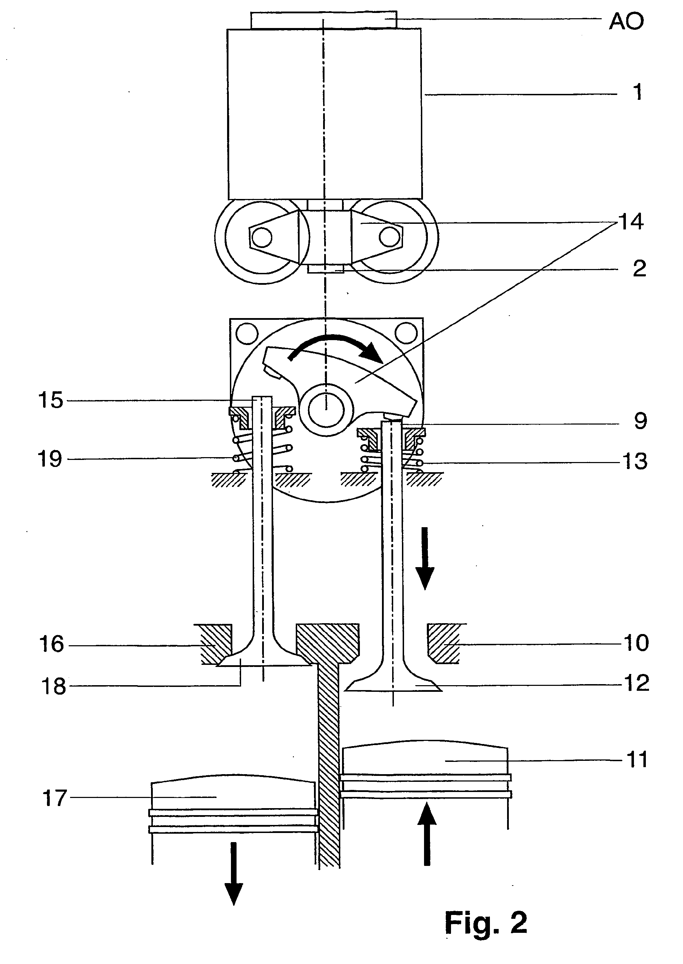

Gemäß Fig. 2 ist eine erfindungsgemäße Anordnung AO zur Erzeugung einer nichtlinearen Kraft- bzw. Drehmomentkennlinie im Rahmen einer rotatorischen Einrichtung zur Betätigung zweier Gaswechselventile 12 und 18 eingesetzt, die sich in zwei Zylindern 10 und 16 mit Kolben 11 und 17 befinden. Die Anordnung AO ist an der Rückseite eines Reluktanzmotors 1 angeflanscht und beeinflusst mit ihrer nichtlinearen Kraft- bzw. Drehmomentkennlinie die Drehmomentabgabe des Reluktanzmotors 1. Dabei sind die Rotorwelle 2 der erfindungsgemäßen Anordnung AO und die Rotorwelle 2 des Reluktanzmotors 1 konstruktiv so ausgelegt und längs so verbunden, dass sie quasi eine Einheit bilden.

An der Rotorwelle 2 des Reluktanzmotors 1 der rotatorischen Einrichtung zur Betätigung zweier Gaswechselventile ist ein Doppelhebel 14 angebracht, dessen Enden jeweils die Ventilschaftenden 9 und 15 der zwei Gaswechselventile 12 und 18 mit den erforderlichen, gewünscht nichtlinearen Betätigungskräften beaufschlagen können. Die klassischen Ventilfedern 9 und 19 liefern die Schließkräfte für die Gaswechselventile 12 und 18.

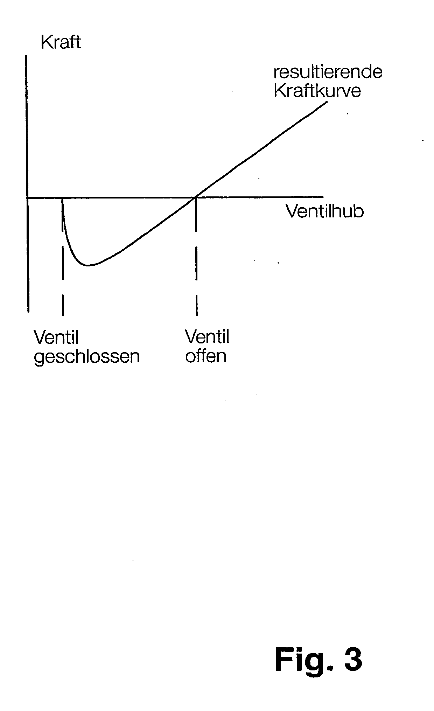

Die erfindungsgemäße Anordnung AO zur Erzeugung einer nichtlinearen Kraft- bzw. Drehmomentkennlinie gem. Fig. 3 wirkt wie folgt:
In der Mittelstellung der Rotorwelle 2 (Drehmoment = Null) stehen sich die Permanentmagnetsegmente 3 der Rotorwelle 2 bzw. 7 des Stators 5 direkt gegenüber, wobei die gegenüberstehenden Permanentmagnetsegmente 3 bzw. 7 entgegengesetzt magnetisiert sind. Die entgegengesetzte Magnetisierung führt durch die Abstoßung der sich gegenüberstehenden Permanentmagnetsegmente 3 bzw. 7 bei geringer Verdrehung zu einem Drehmoment, das in Richtung der Verdrehung wirkt. Die Verdrehung bewirkt weiterhin einen magnetischen Fluss in den Polen 6 des Stators 5 und den Polen 4 der Rotorwelle 2, der in Verbindung mit den jeweils zu den Polen 4 und 6 gedrehten Permanentmagnetsegmenten 3 und 7 eine Zugkraft bewirkt, die additiv zur Abstoßungskraft zwischen den sich gegenüberstehenden Permanentmagnetsegmenten 3 und 7 wirkt. Die weitere Verdrehung bewirkt eine Anziehungskraft zwischen den Permanentmagnetsegmenten 7 des Stators 5 und den Permanentmagnetsegmenten 3 der Rotorwelle 2, die die gleiche Magnetisierungsrichtung aufweisen, und somit ihrerseits bestrebt sind, den Luftspalt zwischen sich zu minimieren und zu einem Drehmoment in der o.g. Richtung führen, wobei dieses Drehmoment bei Verdrehung des Rotors bis zum Gegenüberstehen dieser Permanentmagnetssegmente zu null wird.

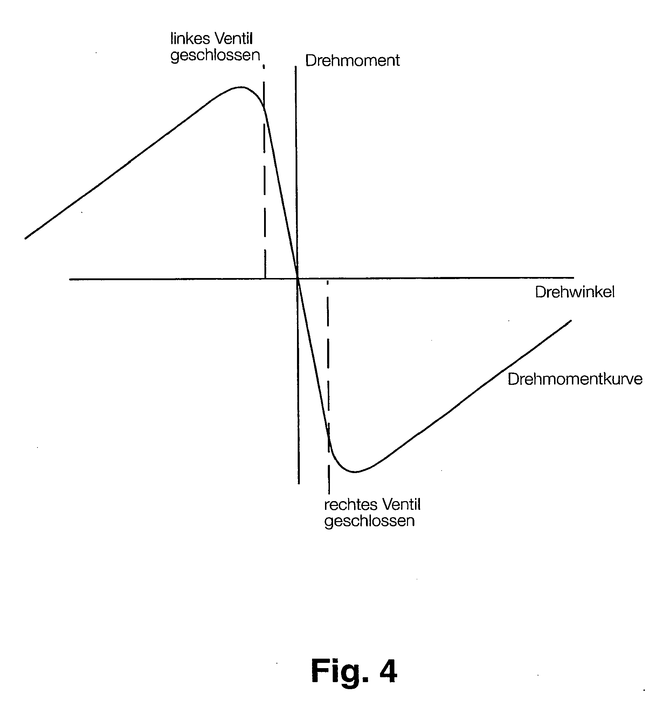

Prinzipiell ist die Funktionsweise der erfindungsgemäßen Anordnung AO auch gegeben, wenn zwischen den Permanentmagnetsegmenten 7 des Stators 5 und den Permanentmagnetsegmenten 3 der Rotorwelle 2 keine Pole 4 bzw. 6 ausgebildet sind. Die dann resultierende Drehmomentenkennlinie stellt sich gem. Fig. 4 näherungsweise sinusförmig dar, wobei das Maximum des Drehmomentes nicht in der Nähe der Mittelstellung (Nullposition) liegt. Das Maximum liegt dann bei halbem Winkel zwischen zwei Polen bzw. Permanentmagnetsegmenten.

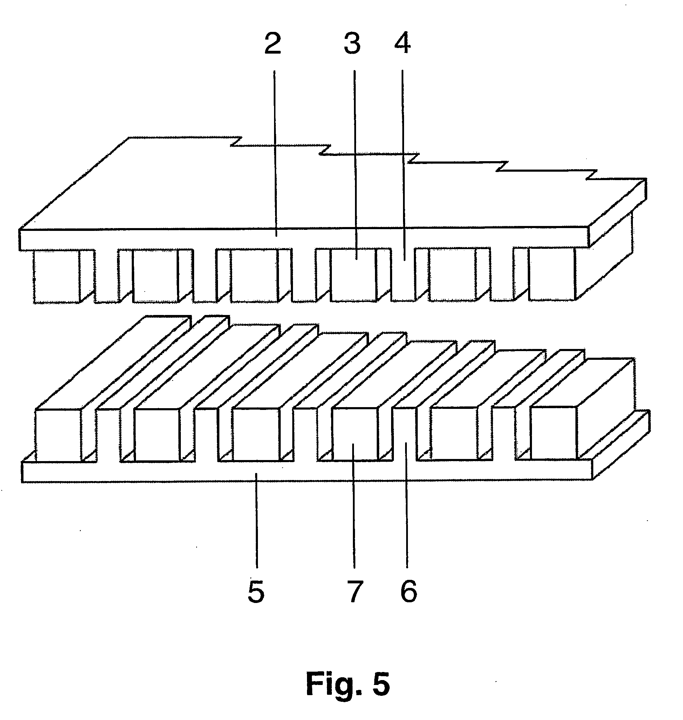

Eine unsymmetrische Auslegung des resultierenden Drehmomentes bezüglich der Rechts- und Linksverdrehung ist möglich, indem in Abhängigkeit der Drehrichtung die Überdeckung der Permanentmagnetsegmente 3 der Rotorwelle 2 und der Permanentmagnetsegmente 7 des Stators 5 sowie der Pole von Rotorwelle 2 und Stator 5 verschieden ist. Möglich wird die unterschiedliche Überdeckung, indem die Bautiefe der Permanentmagnetsegmente 3 bzw. 7 von Stator 5 und Rotorwelle 2 sowie die Bautiefe der Pole 6 und 4 von Stator 5 und Rotorwelle 2 von Permanentmagnetsegment zu Permanentmagnetsegment bzw. von Pol zu Pol verringert oder erhöht wird. Eine beispielhafte Ausführung hierzu zeigt die Abwicklungsskizze der Fig. 5.

Vergleichbar ist die resultierende Kraft- bzw. Drehmomentkennlinie gem. Fig. 4 mit einer bekannten Anordnung, bei der eine Feder auf einen Nocken drückt. Steht der Nocken senkrecht zur Kraftwirkung der Feder, so ist das resultierende Drehmoment an der am Nocken befindlichen Welle null. Verdreht man den Nocken geringfügig, so wird die Federkaft über den Nocken in ein Drehmoment umgewandelt, das bei geringer Verdrehung zunächst gering sein wird, dann ein Maximum erreicht und bei weiterer Verdrehung wieder absinkt. Der Nachteil einer solchen Nockenanordnung ist in den hohen Federkräften und der daraus resultierenden hohen Reibung zwischen Feder und Nocken zu sehen. Weiterhin gestaltet sich die Auslegung auf eine Wunschkennlinie, bei der die Maxima möglichst dicht neben der Nullposition (Mittelstellung) liegen, als äußerst schwierig, wenn nicht unmöglich (unter Berücksichtigung des verfügbaren Bauraumes).

Die resultierende Kurve gem. Fig. 4 bezieht sich auf das Zusammenwirken zwischen einer klassischen Ventilfeder und der erfindungsgemäßen Anordnung AO im Hinblick auf die Funktionsweise als Feder-Masse-Schwinger.

Die erfindungsgemäße Anordnung zur Erzeugung einer nichtlinearen Kraft- bzw. Drehmomentkennlinie ist auch in einer linearer Ausgestaltung denkbar: Die Anordnung besteht in diesem Falle aus einem Läufer, der aus alternierend vorzugsweise quer zur Bewegungsrichtung magnetisierten Permanentmagnetsegmenten besteht, wobei zwischen den Magnetsegmenten unterschiedlicher Polarisation eiserne Pole ausgebildet sein können. Der Stator, beidseitig beabstandet zum Läufer, bestehend aus Eisen oder gestapelten Blechen, die ferromagnetische Eigenschaften aufweisen, trägt auf der jeweils zum Läufer gewandten Seite ebenfalls alternierend vorzugsweise quer zur Bewegungsrichtung magnetisierte Permanentmagnetsegmente, wobei zwischen den Magnetsegmenten unterschiedlicher Polarisation eiserne Pole ausgebildet sein können.

In einer weiteren Ausgestaltung der Erfindung weist die Anordnung zur Erzeugung einer nichtlinearen Kraft- bzw. Drehmomentkennlinie einen zylindrischen Läufer auf, der eine translatorische Bewegung ausführt, wobei der Stator dann sowohl innerhalb als auch ausserhalb des Läufers angeordnet ist.

Die Anwendung der Erfindung führt in den genannten Ausgestaltungen bei der Anwendung bei Ventilsteuerungen dazu, dass der Ventilaktuator Unterstützung beim Öffnungsvorgang der zu betätigenden Ventile erhält.

Die erfindungsgemäße Anordnung stellt in den Endlagen der Ventilbewegung Kraft zum Beschleunigen des Ventils bereit und verursacht insbesondere oberhalb der Position "Ventil geschlossen" nur eine geringe oder gar keine Kraftwirkung.

Insgesamt kann also durch die Anwendung der Anordnung zur Erzeugung einer nichtlinearen Kraft- bzw. Drehmomentkennlinie die Energieeffizienz der elektromotorischen Ventilsteuerung deutlich verbessert werden.

### Liste der Bezugs- und Formelzeichen

- AO: Anordnung (zur Erzeugung einer nichtlinearen Kraft- bzw. Drehmoment- kennlinie)
- 1: Reluktanzmotor
- 2: Rotorwelle
- 3: Permanentmagnetsegment (der Rotorwelle)
- 4: Pol
- 5: Stator
- 6: Pol
- 7: Permanentmagnetsegment (des Stators)
- 9: Ventilschaftende
- 10: Zylinder
- 11: Kolben
- 12: Gaswechselventil
- 13: Ventilfeder
- 14: Doppelhebel
- 15: Ventilschaftende
- 16: Zylinder
- 17: Kolben
- 18: Gaswechselventil
- 19: Ventilfeder

## Patentansprüche

1. Anordnung zur Erzeugung einer nichtlinearen Kraft- bzw. Drehmomentkennlinie,
einen zylinderförmigen eisernen Rotor (2) aufweisend,
auf dessen Umfang polbildende alternierend diametral magnetisierte Permanentmagnetsegmente (3) angebracht sind,
während ein Stator (5), aus Eisen oder gestapelten Magnetblechen bestehend, auf seinem inneren Umfang polbildende alternierend diametral magnetisierte Permanentmagnetsegmente (7) aufweist,
**dadurch gekennzeichnet, dass** zwischen den polbildenden Permanentmagnetsegmenten (3; 7) unterschiedlicher Polarisation von Rotor (2) und/oder Stator (5) eiserne Pole (4; 6) angeordnet sind.

## Claims

1. Arrangement for generating a non-linear force or torque characteristic curve,
having a cylindrical iron rotor (2),
which has fitted to its periphery pole-forming permanent magnet segments (3) which are diametrically magnetized in an alternating manner,
whereas a stator (5), comprising iron or stacked magnetic plates, has pole-forming permanent magnet segments (7) which are diametrically magnetized in an alternating manner on its inner periphery,
**characterized in that** iron poles (4; 6) are arranged between the pole-forming permanent magnet segments (3; 7) with different polarization of the rotor (2) and/or stator (5).

## Revendications

1. Dispositif pour produire une courbe caractéristique non linéaire d'une force ou d'un couple,
présentant un rotor cylindrique en fer (2),
sur le pourtour duquel sont disposés des segments d'aimant permanent (3) formant des pôles, magnétisés alternativement diamétralement,
tandis qu'un stator (5) en fer ou composé de tôles magnétiques empilées présente sur son pourtour intérieur des segments d'aimant permanent (7) formant des pôles, magnétisés alternativement diamétralement,
**caractérisé en ce que** des pôles en fer (4 ; 6) sont disposés entre les segments d'aimant permanent (3 ; 7) formant des pôles de polarisation différente du rotor (2) et/ou du stator (5).
